# EUROPEAN PATENT APPLICATION

(11) **EP 2 063 566 A1**
(43) Date of publication of application: **27.05.2009**
(21) Application number: 08715107.2
(22) Date of filing: 28.02.2008
(51) Int. Cl.: H04L 9/18

(54) **AN ENCRYPTED KEY UPDATING SYSTEM, METHOD THEREOF AND A TRANSMITTING TERMINAL AND A RECEIVING TERMINAL**

(30) Priority: 26.04.2007 CN 200710074227
(71) Applicant: Huawei Technologies Co., Ltd., Longgang District, Shenzhen Guangdong 518129 (CN)
(72) Inventor: CHEN, Xu, Guangdong 518129 (CN)
(74) Representative: Gulde Hengelhaupt Ziebig & Schneider
(86) International application number: PCT/CN2008/070371
(87) International publication number: WO 2008/131662

(57) **Abstract**

A key update system includes an encrypting module and a multiplexing module at a transmitting side, and a de-multiplexing module and a session key generating module at a receiving side. The encrypting module is configured to encrypt a multimedia stream with a session key to form a cipher text for transmission to the multiplexing module; the multiplexing module is configured to multiplex a key update packet and the cipher text to form a composite data stream, and send the composite data stream to the de-multiplexing module, the key update packet including parameters needed for generating the session key; the de-multiplexing module is configured to separate the key update packet and the cipher text in a received composite data stream; and the session key generating module is configured to decrypt the key update packet to recover the parameters needed for generating the session key, from which to generate an update session key. The disclosure also provides a transmitting side and a receiving side for implementing key update, a key update method, methods for transmitting and receiving a key update packet.

## Description

The present application claims benefit of priority from Chinese patent application Serial No.200710074227.0, entitled "BROADCAST ENCRYPTION UPDATE SYSTEM AND METHOD", filed with SIPO on 26/4/2007, the entirety of which is incorporated herein by reference.

### FIELD

The present disclosure relates to a key update system, method, and the associated transmitting side and receiving side.

### BACKGROUND

As Internet Protocol Television, IPTV, services are provided by more and more telecommunication operators, the protection solution for the IPTV content becomes increasingly important. Several standardization organizations in IPTV copyright management have proposed various copyright management solutions for the IPTV services. As a mature real-time transport protocol, Real-time Transport Protocol, RTP, has been widely applied to data carrying for IPTV multimedia services. RTP is a transport protocol for multimedia data streams on Internet. RTP provides end-to-end network transport functionality, which is adapted to transport real-time data (for example, video, audio and simulation data) through multicast and Video on Demand, VOD. However, RTP does not involve real-time services, such as resource reservation and QoS guarantee. Secure Real-time Transport Protocol, SRTP, is a subset of RTP, which provides increased confidentiality on the basis of RTP, and defines message authentication and integrity protection. To establish an SRTP session, a session key is generated first, the session key including encryption key (encr_key), authentication key (auth_key) and salt key (salt_key). The session key is generated by a Pseudorandom Function. The input parameters for the Pseudorandom Function include a Master Key and an RTP session packet index. The RTP session packet index uses a bigram <ROC, Seq #> hidden notification mechanism, where the Roll Over Counter (ROC) is used to indicate the cyclic number of Seq #.

In the current IPTV copyright management, a prevailing solution is to extend the scrambling mechanism in the cable TV scheme and utilize a classified long and short term key update mechanism. The multimedia data is encrypted and carried by SRTP, and transmitted to the receiving side of the SRTP session via multicast. The receiving side decrypts the multimedia data with a session key shared in advance, and recovers the multimedia content. The key of the solution is to deliver key generation parameters efficiently to SRTP. By analyzing the SRTP key generation algorithm, it may be seen that SRTP needs three parameters for session key generation: triad <Master Key, ROC , Seq #>. In addition, a Synchronization Source Identifier, SSRC, parameter for differentiating a different RTP session initiator also has to be sent to SRTP. As noted above, the copyright management system delivers four parameters <SSRC, Master Key, ROC, Seq #> to SRTP, where Master Key is the Short Term Key, STK, of the copyright management system.

In current Encrypted Key Transport, EKT, solutions, the Real-time Transport Control Protocol, RTCP, carries the control function of some RTP protocols. In the process of implementing the invention, the inventors have found that the EKT solution is disadvantageous in that bandwidth reservation is necessary for the RTP session to guarantee the Quality of Service, QoS, of the RTP session. The RTCP packet bandwidth is generally 5% of the available RTCP session bandwidth. The RTCP bandwidth left to the session transmitting side is only 75% of the RTCP total bandwidth. In further consideration of the overhead of the RTCP packet header (about 64 bytes), the available key download bandwidth is very limited in fact. Accordingly, if the broadcast encrypted key is transmitted with the EKT solution, it is inevitable that the period for the key update packet will become too long. Additionally, the EKT solution inherits the disadvantages of the RTCP solution. In applications with a firewall, RTCP ports have to be set on the firewall itself. If RTCP itself is limited to the firewall, traversal cannot be completed, and the key transport cannot be performed.

### SUMMARY

Embodiments of the invention provide a broadcast encrypted key update system, method, and the associated transmitting side and receiving side, which may shorten the period for the key update packet to some extent.

An embodiment of the invention provides a key update system, including an encrypting module and a multiplexing module at a transmitting side, and a de-multiplexing module and a session key generating module at a receiving side. The encrypting module is configured to encrypt a multimedia stream with a session key to form a cipher text for transmission to the multiplexing module; the multiplexing module is configured to multiplex a key update packet and the cipher text to form a composite data stream, and send the composite data stream to the de-multiplexing module, the key update packet including parameters needed for generating the session key; the de-multiplexing module is configured to separate the key update packet and the cipher text in the composite data stream received; and the session key generating module is configured to decrypt the key update packet to recover the parameters needed for generating the session key, from which to generate an update session key.

An embodiment of the invention provides a transmitting side for implementing key update, including: an encrypting module, configured to encrypt a multimedia stream with a session key to form a cipher text; and a multiplexing module, configured to multiplex the cipher text provided by the encrypting module and a key update packet to form a composite data stream, and send the composite data stream to a receiving side, the key update packet including parameters needed for generating the session key.

An embodiment of the invention provides a receiving side for implementing key update, including: a de-multiplexing module, configured to separate a key update packet and a cipher text in a received composite data stream; and a session key generating module, configured to decrypt the key update packet to recover parameters needed for generating a session key, from which to generate an update session key.

An embodiment of the invention provides a key update method, including: encrypting, by a transmitting side, a multimedia stream with a session key to form a cipher text; multiplexing a key update packet and the cipher text to form a composite data stream, and sending the composite data stream to a receiving side, the key update packet including parameters needed for generating the session key; and separating, by the receiving side, the key update packet and the cipher text in the composite data stream, and decrypting the key update packet to recover the parameters needed for generating the session key, from which to generate an update session key.

An embodiment of the invention provides a method for transmitting a key update packet, including: encrypting a multimedia stream with a session key to form a cipher text; and multiplexing a key update packet and the cipher text to form a composite data stream, and sending the composite data stream to a receiving side, the key update packet including parameters needed for generating the session key.

An embodiment of the invention provides a method for receiving a key update packet, including: receiving a composite data stream, the composite data stream comprising a key update packet and a cipher text which are multiplexed together; separating the key update packet and the cipher text in the composite data stream; and decrypting the key update packet to recover parameters needed for generating a session key, from which to generate an update session key.

### BRIEF DESCRIPTION OF THE DRAWINGS

Fig.1 shows the configuration of a broadcast key update system according to an embodiment of the present invention;

Fig.2 is a flow chart showing a broadcast key update method according to an embodiment of the present invention; and

Fig.3 shows the format of a key update packet according to an embodiment of the present invention.

### DETAILED DESCRIPTION

The objects, solutions and advantages of the present invention will become more apparent from the detailed description set forth below when taken in conjunction with the drawings and embodiments.

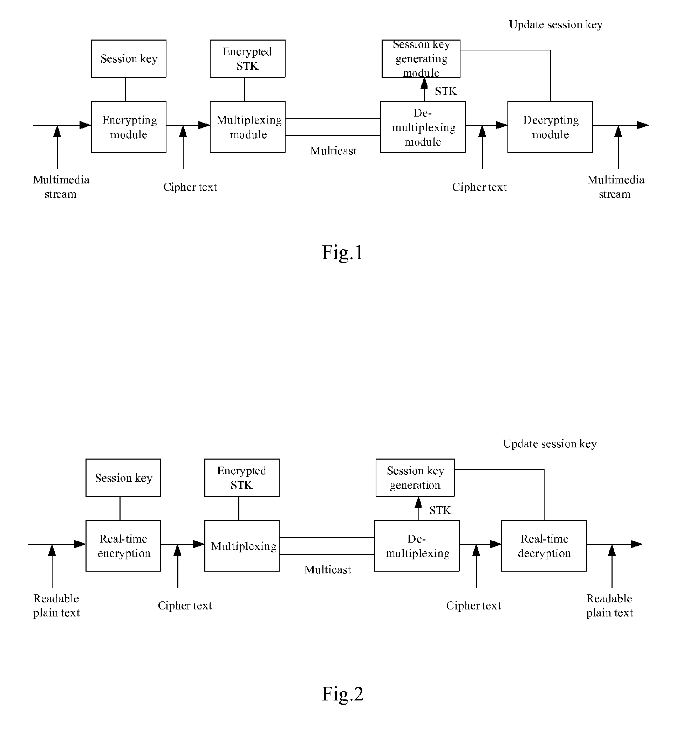

Fig.1 shows the configuration of a broadcast key update system according to an embodiment of the present invention. The broadcast key update system includes an encrypting module, a multiplexing module, a de-multiplexing module, a decrypting module, and a session key generating module. The encrypting module is configured to receive a multimedia stream and encrypt the multimedia stream with a session key to form a cipher text for transmission to the multiplexing module. The multiplexing module is configured to multiplex a broadcast key update packet and the cipher text to form a composite data stream, and send the composite data stream to the de-multiplexing module at the session receiving side over a multicast data channel, the broadcast key update packet including a short-term key STK and parameters needed for establishing an SRTP session. The de-multiplexing module is configured to separate the broadcast key update packet and the cipher text, recover the short-term key STK, and send the cipher text to the decrypting module. From the STK and the parameters for establishing the SRTP session, the session key generating module generates an update session key, and delivers the update session key to the decrypting module for use in later data decryption. The decrypting module is configured to recover the multimedia stream in accordance with the update session key. The RTP multiplexing technique employed at the multiplexing module may vary a lot. A basic version number field multiplexing technique is used in this embodiment. The value of the Version field in a standard RTP packet is RTP version number 2. The RTP packet and the broadcast encrypted key update packet are differentiated by a new version number.

Fig.2 is a flow chart showing a broadcast key update method according to an embodiment of the present invention. The broadcast key update method includes the following steps.

A multimedia stream is encrypted with a session key to form a cipher text.

The cipher text and a broadcast key update packet are multiplexed to form a composite data stream, which is sent to the client of the session. The broadcast key update packet includes a short-term key STK for encryption protection and parameters needed for establishing an SRTP session.

Due to use of the RTP multiplexing technique, the problem that there may exist asynchrony between the encrypted multimedia data and the key packet can be solved by setting a packet buffer. The inventors have found that asynchrony mainly occurs in the RTP session setup phase and the key update phase. In the first case, when the RTP session just starts, the RTP real-time multimedia data may arrive earlier than the broadcast encrypted packet. The session receiving side then buffers the SRTP data packets. After receiving the broadcast encrypted key update packet, the session receiving side decrypts the SRTP key generation parameters, recovers the SRTP session key, and then decrypts the buffered multimedia data packets. In the second case, that is, in the key update phase, key update packets are buffered. In a key update process, the IPTV client buffers both old and new session key information. The client may check whether to use the new session key to decrypt the content according to Seq# of the RTP packet. The key update period usually lasts only a few seconds for the SSC algorithm. Buffering the multimedia data packets or key update packets will not incur much buffering overhead. At the same time, buffering the multimedia data will not incur unacceptable access delay.

In the implementation of RTP coding, RTP verification is first performed on the data received at the RTP ports, usually including packet and stream based verifications. In the packet based verification, the Version field is determined first. Only packets with Version=2 are delivered to the RTP protocol stack for processing. Here, a determination branch is added, for example, a packet with Version=2 is sent to be processed by the broadcast encryption procedure.

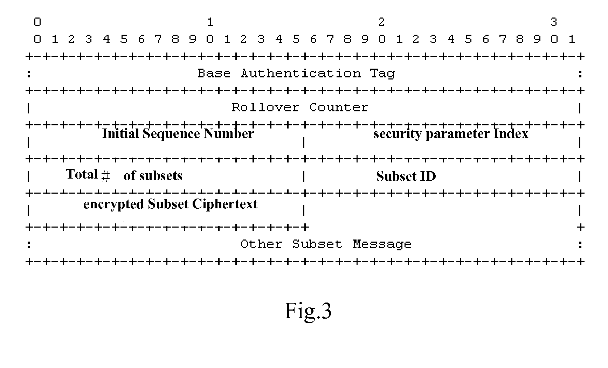

The specific format of the broadcast encrypted key packet is similar to the definition of EKT, including SSRC, SEQ#, ROC and extensible cipher text portion. The cipher text portion includes a subset ID and the cipher text encrypted with a subset key. The packet includes a verification field, for protection of the integrity and authenticity of the broadcast encrypted packet. Furthermore, a Security Parameter Index in the packet is used to differentiate a key update packet with a different period. It may be used along with the subset ID for anti-playback protection of the key update packet. The specific format is shown in Fig.3.

The broadcast key update packet and the cipher text are separated. STK is recovered, and it is used together with the parameters for establishing the SRTP session, to generate the session key, which may be used for decryption of the multimedia data stream.

In the broadcast key update method according to an embodiment of the invention, the user state change triggers the key update procedure. In the IPTV system, the user joining state may be obtained by listening to an RTSP Setup packet. The user departure state is embodied mainly in three aspects: terminate the RTP session, switch the channel or exit the play. Each of the three aspects may generate the user departure state independently. For the first case, the user departure information may be obtained by processing an RTCP BYE packet. For the latter two cases, it may be completed by processing an RTSP Teardown message or an Announce message numbered 2103, 5502 or 5401.

Different subset information is independent of each other in the broadcast key update method according to an embodiment of the invention. The packet format of Fig.3 defines a subset ID and an encrypted subset cipher text in pairs. The key update packet is delivered along the IPTV data channel, and the users to receive the data are gradually limited to a particular subset. Other unrelated subset key update information is meaningless to the users on the delivery path. An intermediate monitoring node on the IPTV data transmission channel filters out these unrelated subset key update information, and multiplexes the identified and determined key update packet for transmission over the IPTV data channel. The specific Identification and Determination efficiency depends on the construction of the Stateful Subset Cover Algorithm key tree. Users under the same convergence node are desired to cover a subset as much as possible, which may simplify the computational complexity of the Identification and Determination algorithm to some extent. In an embodiment of the invention where the advantages of the terminal Stateful Subset Cover, SSC, Algorithm and the SRTP protocol are combined, distribution of the SRTP master key may be performed by using the advantage of the SSC algorithm in broadcast encryption. In a terminal Stateful Subset Cover, SSC, Algorithm where the number of users is 219 and decreases as a sine function or a monotonous exponent function, the number of subsets in the broadcast packet is only about 1/4 as many as in the Logical Key Hierarchy, LKH, algorithm (because the LKH algorithm is proposed earlier than the concept of complete subset, the number of subsets for the LKH key update packet is usually the number of path nodes to be encrypted on the LKH key tree) and the Stateless Subset Different, SSD, algorithm. Moreover, the number of subsets for key update is not related to the number of actual users, but only related to the number of the added users and the number of the revoked users, which may be given by: # of Total Subsets=Δadded users + 2×Δrevoked users + 1.

According to embodiments of the invention, the key update speed may meet the requirements for IPTV copyright management. Taking an RTP multiplexing method in a bandwidth-limited environment as an example, if the simulated environment keeps unchanged, the key transport bandwidth increases from 5% to 95% due to use of RTP channel carrying. At the same time, no RTP header overhead is introduced in the RTP multiplexing method. Compared with an RTCP EKT packet, the payload is increased with 64 bytes due to decrease in the header overhead. If the above two points are combined, according to the data computation in the above example, key update takes 2.4 seconds in total. This time interval may meet the requirement for IPTV digital copyright.

In embodiments of the invention, the key update packet may traverse a firewall without using complicated firewall traversal techniques. The RTP multiplexing technique and the RTSP carrying technique use the data channel and the control channel of IPTV, respectively. Regardless of the RTP multiplexing technique or the RTSP carrying technique, no extra ports are required to be established on the firewall itself.

In embodiments of the invention, alterations to existing protocols are reduced and the difficulty for implementation is hence decreased. With the RTP multiplexing technique, the key update packet is transmitted along the RTP data channel. Accordingly, the key update packet may be segmented flexibly to adapt to the QoS policy for RTP transmission.

It can be seen from the above embodiments of the invention that high frequency broadcast key update may be performed for a large scale of user groups due to the use of the RTP channel carrying. Furthermore, there is no need to establish additional ports for the key update packet to traverse the firewall.

The invention has been described above with reference to exemplary embodiments, which shall not be used to limit the invention. It will be apparent to persons skilled in the art that various changes and modifications are possible without departing from the scope of the invention.

## Claims

1. A key update system, comprising an encrypting module and a multiplexing module at a transmitting side, and a de-multiplexing module and a session key generating module at a receiving side, wherein
the encrypting module is configured to encrypt a multimedia stream with a session key to form a cipher text for transmission to the multiplexing module;
the multiplexing module is configured to multiplex a key update packet and the cipher text to form a composite data stream, and send the composite data stream to the de-multiplexing module, the key update packet comprising parameters needed for generating the session key;
the de-multiplexing module is configured to separate the key update packet and the cipher text in the composite data stream received; and
the session key generating module is configured to decrypt the key update packet to recover the parameters needed for generating the session key, from which to generate an update session key.

2. The key update system according to claim 1, further comprising:
a decrypting module, configured to decrypt the received cipher text with the update session key provided by the session key generating module, so as to obtain the multimedia stream.

3. The key update system according to claim 1, wherein the multiplexing module is further configured to utilize a Real-time Transport Protocol, RTP, multiplexing technique to multiplex the key update packet and the cipher text to form the composite data stream, and send the composite data stream to the de-multiplexing module, the key update packet comprising parameters needed for generating the session key.

4. The key update system according to claim 3, wherein the RTP multiplexing technique is a basic version number field multiplexing technique, the version number of the cipher text in the composite data stream being different from the version number of the broadcast encrypted key update packet.

5. The key update system according to any one of claims 1 to 4, wherein the parameters needed for generating the session key comprise a Short Term Key, STK and parameters for establishing a Secure Real-time Transport Protocol, SRTP, session.

6. A transmitting side for implementing key update, comprising:
an encrypting module, configured to encrypt a multimedia stream with a session key to form a cipher text; and
a multiplexing module, configured to multiplex the cipher text provided by the encrypting module and a key update packet to form a composite data stream, and send the composite data stream to a receiving side, the key update packet comprising parameters needed for generating the session key.

7. The transmitting side according to claim 6, wherein the multiplexing module is further configured to utilize a Real-time Transport Protocol, RTP, multiplexing technique to multiplex the cipher text provided by the encrypting module and the key update packet to form the composite data stream, and send the composite data stream to the receiving side, the key update packet comprising parameters needed for generating the session key.

8. A receiving side for implementing key update, comprising:
a de-multiplexing module, configured to separate a key update packet and a cipher text in a received composite data stream; and
a session key generating module, configured to decrypt the key update packet to recover parameters needed for generating a session key, from which to generate an update session key.

9. The receiving side according to claim 8, wherein the de-multiplexing module is further configured to perform a Real-time Transport Protocol, RTP, verification on the received composite data stream with an RTP code, so as to separate the key update packet and the cipher text in the composite data stream.

10. A key update method, comprising:
encrypting, by a transmitting side, a multimedia stream with a session key to form a cipher text;
multiplexing a key update packet and the cipher text to form a composite data stream, and sending the composite data stream to a receiving side, the key update packet comprising parameters needed for generating the session key; and
separating, by the receiving side, the key update packet and the cipher text in the composite data stream, and decrypting the key update packet to recover the parameters needed for generating the session key, from which to generate an update session key.

11. The key update method according to claim 10, further comprising:
decrypting a cipher text received currently or a cipher text received and buffered previously or a cipher text received subsequently with the update session key, to obtain the multimedia stream.

12. A method for transmitting a key update packet, comprising:
encrypting a multimedia stream with a session key to form a cipher text; and
multiplexing a key update packet and the cipher text to form a composite data stream, and sending the composite data stream to a receiving side, the key update packet comprising parameters needed for generating the session key.

13. The method according to claim 12, wherein multiplexing the key update packet and the cipher text comprises:
utilizing a Real-time Transport Protocol, RTP, multiplexing technique to multiplex the key update packet and the cipher text.

14. The method according to claim 13, wherein sending the composite data stream to the receiving side comprises:
sending the composite data stream to the receiving side over an Internet Protocol Television, IPTV, data channel.

15. The method according to claim 14, wherein sending the composite data stream to the receiving side over the IPTV data channel comprises:
sending the composite data stream along the IPTV data channel, and
limiting users requiring key update to a particular subset,
wherein an intermediate node on the IPTV data transmission channel de-multiplexes the composite data stream to obtain the key update packet, filters out other unrelated subset key update information, regenerates a packet integrity protection tag, re-multiplexes an identified and determined key update packet and the cipher text, for transmission to the receiving side over the IPTV data channel.

16. The method according to any one of claims 12 to 15, wherein the parameters needed for generating the session key comprise a Short Term Key, STK and parameters for establishing an Secure Real-time Transport Protocol, SRTP, session.

17. The method according to any one of claims 12 to 15, wherein factors causing content update of the key update packet comprise user state change, which is known by monitoring the user's joining and departure states.

18. A method for receiving a key update packet, comprising:
receiving a composite data stream, the composite data stream comprising a key update packet and a cipher text which are multiplexed together;
separating the key update packet and the cipher text in the composite data stream; and
decrypting the key update packet to recover parameters needed for generating a session key, from which to generate an update session key.

19. The method according to claim 18, wherein separating the key update packet and the cipher text in the composite data stream comprises:
performing a Real-time Transport Protocol, RTP, verification on the composite data stream received at an RTP port with an RTP code, so as to separate the key update packet and the multimedia stream.

20. The method according to claim 18 or 19, wherein the parameters needed for generating the session key comprise a Short Term Key, STK and parameters for establishing a Secure Real-time Transport Protocol, SRTP session.
